# FASCICULE DE BREVET EUROPEEN

(11) **EP 2 769 074 B1**
(45) Date de publication et mention de la délivrance du brevet: **08.08.2018**
(21) Numéro de dépôt: 12780236.1
(22) Date de dépôt: 11.10.2012
(51) Int. Cl.: F02M 26/16, F02M 26/70, F02M 26/71, F16K 11/052, F02M 26/06, F02M 26/30

(54) **VANNE DE CIRCULATION DE GAZ D'ÉCHAPPEMENT D'UN MOTEUR, NOTAMMENT MOTEUR DE VÉHICULE AUTOMOBILE**
UMLAUFVENTIL FÜR MOTORABGASE, INSBESONDERE EINES KRAFTFAHRZEUGMOTORS
CIRCULATION VALVE FOR THE EXHAUST GASES OF AN ENGINE, IN PARTICULAR A MOTOR VEHICLE ENGINE

(30) Priorité: 20.10.2011 FR 1159477
(43) Date de publication de la demande: 27.08.2014
(73) Titulaire: Valeo Systèmes de Contrôle Moteur, 95800 Cergy (FR)
(72) Inventeur: HODEBOURG, Grégory, F-SARTROUVILLE 78500 (FR); ADENOT, Sébastien, F-95300 Pontoise (FR)
(74) Mandataire: Garcia, Christine
(86) Numéro de dépôt international: PCT/FR2012/052308
(87) Numéro de publication internationale: WO 2013/057413

(56) Documents cités:
- WO-A1-2007/063221
- WO-A1-2010/000752
- WO-A1-2012/001283
- DE-A1-102004 055 846
- FR-A1- 2 914 952

## Description

La présente invention concerne une vanne de circulation de gaz d'échappement d'un moteur, notamment moteur de véhicule automobile.

Ladite vanne est destinée à régler, par exemple, un débit de gaz d'échappement dirigés vers la ligne d'admission du moteur pour être mélangés à de l'air frais avant d'être introduits dans ledit moteur. En particulier, elle pourra être utilisée dans des architectures moteur, notamment diesel, à turbo compresseur, ladite vanne étant prévue sur la ligne d'échappement du moteur en aval de la turbine du turbo compresseur pour prélever une partie des gaz.

Il a déjà été proposé une vanne comprenant un corps définissant un conduit principal, destiné à être raccordé à la ligne d'échappement du moteur, et un conduit auxiliaire pour une recirculation des gaz d'échappement, ledit conduit auxiliaire et ledit conduit principal étant reliés l'un à l'autre. Ladite vanne comprend en outre un volet mobile entre une position de fermeture, empêchant la communication entre les deux conduits, et une position de pleine recirculation, permettant la mise en communication desdits conduits. DE 10 2004 055846 A1 décrit une vanne de circulation de gaz d'échappement d'un moteur comprenant un corps définissant un conduit principal et un conduit auxiliaire débouchant dans ledit conduit principal. Il a été mis en évidence par le déposant dans le cadre de la présente invention que si la vanne doit favoriser la circulation des gaz d'échappement dans le conduit auxiliaire en position de recirculation, elle ne doit pas pour autant risquer d'étouffer le moteur. Ainsi, même si le volet doit assurer une étanchéité du conduit principal en position de fermeture, il convient à l'inverse de conserver un débit de fuite suffisant dans ledit conduit principal en position de recirculation.

Des premiers essais basés sur l'utilisation des jeux de fonctionnement entre le volet et le corps de la vanne pour créer un tel débit fuite ont montré l'insuffisance d'une telle solution et l'invention vise à améliorer la situation.

Elle propose à cette fin une vanne de circulation de gaz d'échappement d'un moteur comprenant un corps définissant un conduit principal, destiné à être raccordé à une ligne d'échappement du moteur, et un conduit auxiliaire débouchant dans ledit conduit principal pour une recirculation des gaz d'échappement, ladite vanne comprenant en outre un volet mobile entre une position de fermeture, empêchant la communication entre les deux conduits, et une position de pleine recirculation, permettant la mise en communication desdits conduits, vanne dans laquelle ledit corps et ledit volet sont mutuellement configurés pour que, dans ladite position de pleine recirculation, ledit volet obture ledit conduit principal de 65 à 95%, notamment de 70 à 75%.

On constate qu'en dégageant ainsi une plus grande zone de passage entre le volet et le corps, on limite considérablement les risques d'étouffement du moteur tout en assurant un débit dans le conduit auxiliaire permettant un taux satisfaisant de recirculation des gaz d'échappement.

Selon différents modes de réalisation de l'invention, qui pourront être pris ensemble ou séparément :
- ledit conduit auxiliaire débouche dans ledit conduit principal par une fenêtre de passage et ledit volet ferme ladite fenêtre de passage, en position de fermeture, ledit volet présentant une aile, dite de déviation, fermant partiellement ledit conduit principal, notamment en aval du conduit auxiliaire, lorsque le volet est en positon de pleine recirculation,
- l'aile de déviation et le corps de la vanne sont configurés pour que, lorsque le volet est en position de pleine recirculation, une fente soit ménagée entre ladite aile de déviation et ledit corps,
- ladite aile de déviation présente un bord libre venant en vis-à-vis du corps et ladite fente est située tout le long dudit bord libre,
- la fente présente une épaisseur constante entre le bord libre et le corps en position de pleine recirculation,
- ladite aile de déviation présente un contour rectangulaire et ledit conduit principal présente une section sensiblement rectangulaire, au moins au droit de l'emplacement de l'aile de déviation lorsque le volet est position de pleine recirculation,
- le volet est monté pivotant par un axe d'articulation dans le corps de la vanne et le volet comprend une aile d'obturation reliée à l'aile de déviation par une zone intermédiaire, l'axe d'articulation étant à distance du volet, l'aile d'obturation fermant la fenêtre de passage lorsque le volet est en position de fermeture,
- ladite vanne comprend en outre un joint d'étanchéité, ledit joint présentant une ouverture en correspondance avec ladite fenêtre de passage pour la circulation du fluide, ledit volet fermant ladite ouverture en position de fermeture,
- ledit volet comprend en outre une aile d'obturation reliée à l'aile de déviation par une zone intermédiaire, ladite aile d'obturation obturant ladite ouverture du joint, lorsque le volet est dans la position de fermeture, ladite aile d'obturation et ladite aile de déviation étant alors prévues de part et d'autre du joint tandis que ladite zone intermédiaire traverse ladite ouverture du joint,
- la vanne comprend, à proximité de la zone intermédiaire du volet, un axe d'articulation du volet et ladite aile d'obturation présente une dimension s'étendant de part et d'autre au-delà de la dimension selon laquelle s'étend ladite aile de déviation, selon la direction de l'axe d'articulation du volet,
- ladite aile de déviation et ladite zone intermédiaire s'étendent sensiblement selon la même dimension selon ladite direction de l'axe d'articulation du volet,
- ledit joint comprend une zone plane présentant une surface contre laquelle ladite aile d'obturation vient en appui par l'une de ses faces, prévue plane, dit face d'appui de l'aile d'obturation, et/ou une surface opposée contre laquelle l'aile de déviation vient en appui, par l'une de ses faces, prévue plane, dite face d'appui de l'aile de déviation, lorsque le volet est en position de fermeture, ladite ouverture pour le passage du fluide prévue dans le joint étant positionnée au niveau de ladite zone plane,
- ladite surface d'appui de l'aile d'obturation et ladite surface d'appui de l'aile de déviation du volet s'étendent selon deux plans parallèles distants l'un de l'autre,
- lesdits plans sont distants d'une dimension correspondant à l'épaisseur du joint dans ladite zone plane,
- l'aile de déviation du volet présente une surface opposée à sa surface d'appui, plane, et la zone intermédiaire présente un pan incliné entre la face d'appui de l'aile d'obturation et ladite face opposée,
- ledit joint présente un bossage le long d'une partie de l'ouverture de passage, prévue en vis-à-vis de l'aile de déviation du volet quand celui-ci est en position de fermeture, ledit bossage étant configuré pour être comprimé par ladite aile de déviation du volet quand celui-ci est en position de fermeture,
- ledit joint pourra présenter, notamment, une zone borgne, située en vis-à-vis de ladite aile de déviation lorsque le volet est en position de fermeture,
- ledit corps comprend, par exemple, un logement pour un moteur d'actionnement du volet, ledit corps étant configuré pour définir une lame d'air entre ladite zone borgne et ledit logement.

L'invention sera mieux comprise à la lumière de la description suivante qui n'est donnée qu'à titre indicatif et qui n'a pas pour but de la limiter, accompagnée des dessins joints parmi lesquels :
- la figure 1 illustre en perspective une vanne conforme à l'invention, associée à un échangeur de chaleur,
- la figure 2 illustre en perspective une partie de la vanne de la figure 1
- la figure 3 illustre en vue de coupe la vanne des figures 1 à 2 précédente, la coupe étant réalisée selon un plan orienté selon l'aile de déviation du volet de la vanne, en position de pleine recirculation,
- la figure 4 illustre en perspective un joint d'étanchéité et un volet destinés à être montés dans la vanne des figures précédentes,
- la figure 5 est une vue de coupe, effectuée selon un plan de coupe orthogonale à l'axe d'articulation du volet, illustrant le joint d'étanchéité et le volet de la figure 4, monté dans leur vanne, le volet étant dans une position intermédiaire entre sa position de fermeture et sa position de pleine recirculation.

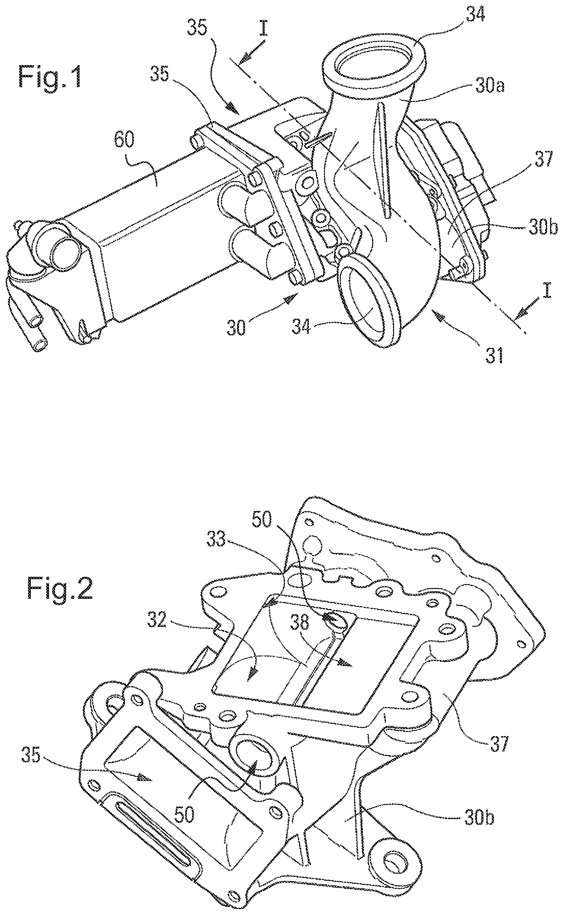

Comme illustré aux figures 1 à 2, l'invention concerne une vanne de circulation de gaz d'échappement d'un moteur, notamment moteur de véhicule automobile. Il pourra en particulier s'agir d'une vanne permettant l'écoulement des gaz d'échappement le long de la ligne d'échappement du moteur et une recirculation des gaz à l'admission du moteur.

Ladite vanne comprend un corps 30 définissant un conduit principal 31 et un conduit auxiliaire 32 d'écoulement du fluide, débouchant dans ledit conduit principale 31. Le conduit principal 31 est destiné à être raccordé à la ligne d'échappement du moteur et le conduit auxiliaire sert à la recirculation de gaz d'échappement.

Le conduit principal présente, par exemple, des orifices 34 d'entrée et de sortie destiné à communiquer avec la ligne d'échappement d'un moteur. Le conduit auxiliaire présente un orifice 35 communiquant, par exemple, avec une ligne de recirculation de gaz d'échappement. Ladite ligne de recirculation comprend ici un échangeur de chaleur 60 dans lequel le gaz d'échappement débouche en sortie de l'orifice 35. Ledit corps 30 comprend en outre, notamment, un logement 37 pour un moteur d'actionnement du volet.

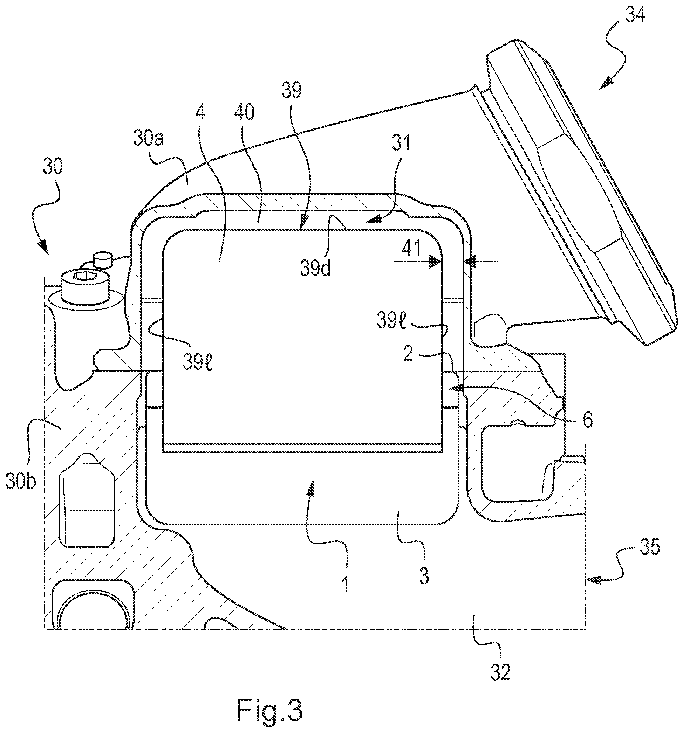

Comme illustré à la figure 3, ladite vanne comprend en outre un volet 1 mobile entre deux positions, une première position de fermeture, empêchant la communication entre les deux conduits 31, 32, et une seconde position de pleine recirculation, permettant la mise en communication desdits conduits 31, 32. Bien naturellement, ledit volet pourra également occupée n'importe quelle position entre ces deux positions extrêmes de fermeture et de pleine recirculation. A la figure 3, le volet est en position de pleine recirculation. La vanne est configuré pour que ce soit dans cette position du volet que le débit de gaz dans le conduit auxiliaire 32 soit maximum.

Selon l'invention, ledit corps 30 et ledit volet 1 sont mutuellement configurés pour que, dans ladite position de pleine recirculation, ledit volet obture ledit conduit principal 31 de 65 à 95%. On a en effet constaté que la quantité de gaz d'échappement continuant à circuler dans la ligne d'échappement est alors suffisante pour limiter les risques d'étouffement du moteur et la quantité de gaz d'échappement déviée dans le conduit auxiliaire 32 permet d'obtenir les débits de recirculation souhaités.

On a obtenu des résultats particulièrement avantageux lorsque le volet 1 obture le conduit principal 31 de 65 à 80%, notamment de 70 à 75%.

Ledit conduit auxiliaire 32 débouche dans ledit conduit principal 31, notamment, par une fenêtre de passage 33 (mieux visible à la figure 2), ledit volet 1 fermant ladite fenêtre de passage 33, en position de fermeture. Par ailleurs, ledit volet 1 présente, par exemple, une aile 4, dite de déviation, fermant partiellement ledit conduit principal 31, lorsque le volet 1 est en positon de pleine recirculation. Ladite aile de déviation 4 présente un bord libre 39 venant en vis-à-vis du corps 30.

L'aile de déviation 4 et le corps 30 de la vanne sont ici configurés pour que, lorsque le volet 1 est en position de pleine recirculation, une fente 40 soit ménagée entre ladite aile de déviation 4 et ledit corps 30. C'est ainsi grâce à ladite fente 40 que le volet 1 n'obture le conduit principal que dans la mesure évoquée plus haut.

Ladite fente 40 est située, par exemple, tout le long dudit bord libre 39 et pourra présenter une épaisseur constante entre le bord libre 39 et le corps 30 en position de pleine recirculation. Par épaisseur, on entend la dimension, repérée par la flèche illustrée 41 à la figure 3, entre le bord libre 39 de l'aile de déviation 4 et la partie de la paroi du conduit principal 31 située en vis-à-vis de ladite aile de déviation 4 en position de pleine ouverture.

Ladite aile de déviation 4 présente ici un contour rectangulaire et ledit conduit principal 31 présente une section sensiblement rectangulaire, au moins au droit de l'emplacement de l'aile de déviation 4 lorsque le volet 1 est position de pleine recirculation.

Ledit bord libre 39 présente, par exemple, une portion distale 39d et deux portions latérales opposées 391 reliant le bord distale 39d au reste du volet 1. Le bord libre 39 présente ici un rayon reliant le bord distal 39d aux bords latéraux 391. Il pourra valoir entre 5 et 40 mm.

A titre d'exemple non limitatif, l'aile de déviation 4 présente une surface comprise entre 20 et 30 cm² et la largeur de la fente est comprise entre 3 et 5 mm. Plus précisément, l'aile de déviation 4 pourra présenter une surface d'environ 25 cm² pour une fente d'environ 4 mm.

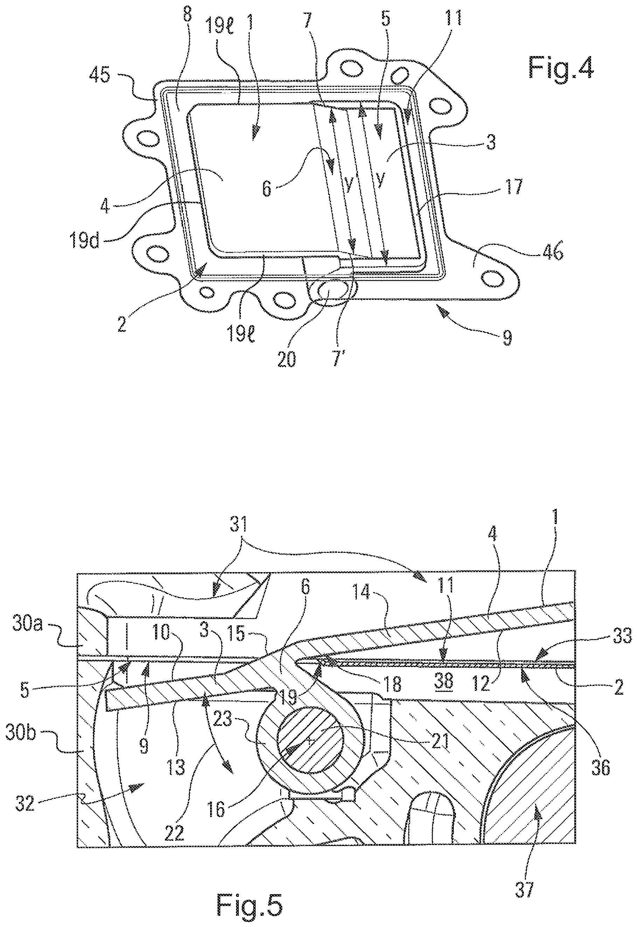

Comme illustré aux figures 4 et 5, la vanne conforme à l'invention pourra en outre comprendre un joint 2 présentant une ouverture 5 pour le passage des gaz d'échappement. Ladite ouverture 5 du joint permet ainsi le passage du fluide d'un conduit 31 à l'autre 32. Autrement dit, ladite ouverture 5 du joint 2 est prévue en vis-à-vis de la fenêtre 33 du corps 30. Ledit joint 2 sert de siège à ladite vanne 1 en position de fermeture.

Dans sa position de pleine recirculation (figure 3), le volet 1 est incliné par rapport au joint 2, par exemple de 25 à 65°.

Le volet 1 comprend ici en outre une aile 3, dite aile d'obturation, relié à l'aile de déviation 4 par une zone intermédiaire 6. Ladite aile d'obturation 3 obture ladite ouverture 5 du joint 2, lorsque le volet 1 est en position de fermeture. Dans cette même position de fermeture du volet, l'aile d'obturation 3 et l'aile de déviation 4 s'étendent d'un côté et de l'autre du joint d'étanchéité 2, de façon transversale à celui-ci pour laisser passer le fluide tandis que la zone intermédiaire 6, reliant ladite aile d'obturation 3 et ladite aile de déviation 4, traverse ladite ouverture 5 du joint 2, par exemple de façon affleurante, au niveau de zones 7, 7' du contour de ladite ouverture 5 du joint.

On peut ainsi obtenir une étanchéité autour de l'ouverture 5 du joint tout en autorisant le débattement du volet entre sa position de pleine recirculation et sa position de fermeture sans avoir à laisser des jeux importants entre l'ouverture 5 du joint 2 et le contour du volet 1.

Ledit joint 2 comprend une zone plane 8 présentant une surface 9 contre laquelle ladite aile d'obturation 3 vient en appui par l'une 10 de ses faces, prévue plane, dit face d'appui de l'aile d'obturation, et/ou une surface opposée 11 contre laquelle l'aile de déviation 4 du volet vient en appui, par l'une 12 de ses faces, prévue plane, dite face d'appui de l'aile de déviation, lorsque le volet 1 est en position de fermeture. Ladite ouverture 5 pour le passage du fluide prévue dans le joint 2 est positionnée au niveau de ladite zone plane 8. L'étanchéité est ainsi réalisée par un contact face contre face au niveau de la ou desdites ailes.

Ladite surface d'appui 10 de l'aile d'obturation et ladite surface d'appui 12 de l'aile de déviation du volet s'étendent, par exemple, selon deux plans parallèles distants l'un de l'autre, par exemple d'une dimension correspondant à l'épaisseur du joint dans ladite zone plane 8. On peut ainsi assurer des contacts du type plan sur plan.

L'aile d'obturation 3 présente une surface 13, opposée à sa surface d'appui 10, et l'aile d'obturation 4 présente une surface 14 opposée à sa surface d'appui 12. Ces deux faces opposées 13, 14 sont, par exemple, planes et la zone intermédiaire 6 présente un pan incliné 15 entre la face d'appui 10 de l'aile d'obturation 3 et ladite face opposée 14 de l'aile de déviation 4. On favorise de la sorte l'écoulement du fluide à la surface du volet.

La vanne comprend ici un axe d'articulation 16 du volet 1, prévu excentré par rapport auxdites ailes 3, 4 et situé, par exemple, à proximité de la zone intermédiaire 6 du volet.

Selon la direction de l'axe d'articulation du volet, ladite aile d'obturation 3 présente une dimension y s'étendant de part et d'autre au-delà de la dimension y' selon laquelle s'étend la zone intermédiaire 6, au moins au niveau d'une zone de jonction entre ladite zone intermédiaire et ladite aile d'obturation 3. La dimension y' de la zone intermédiaire 6 et la dimension de l'aile d'obturation 4 selon ladite direction de l'axe de rotation du volet 1 pourront être identique. Autrement dit, la dimension de l'aile d'obturation 4 selon ladite direction de l'axe de rotation du volet 1 pourra être inférieure à la dimension y de l'aile d'obturation 3.

La surface d'appui 10 de l'aile d'obturation 3 peut ainsi présenter une zone de contact 17, sous la forme d'une portion angulaire d'anneau, avec le joint 2, sur une première partie de la périphérie de l'ouverture 5 du joint, d'un côté dudit joint, tandis que la surface d'appui 12 de l'aile de déviation 4 présente, de l'autre côté du joint, une zone de contact 18, sur une partie complémentaire de la périphérie de l'ouverture 5 du joint.

La zone de contact 17 offerte par l'aile d'obturation 3 s'étend aussi au droit de la zone intermédiaire 6, au niveau des zones 7, 7'. On renforce ainsi l'étanchéité et on pourra avoir une zone intermédiaire 6 qui n'affleure pas le contour de l'ouverture 5 du joint.

L'ouverture 5 du volet présente, par exemple, un contour sensiblement rectangulaire, de même que le volet d'obturation 3. Et la zone de contact 17 de ladite aile d'obturation 3 s'étend le long de trois des côtés de ladite ouverture 5. Quant à la zone de contact 18, elle s'étend le long du dernier côté. Ladite zone intermédiaire est prévue en vis-à-vis du contour de ladite ouverture 5 sur une partie de deux de ses côtés opposés. La zone de contact 17 de l'aile d'obturation 3 est prolongé au droit de ladite partie intermédiaire 6, au niveau des zone 7, 7'. Quant à l'aile d'obturation 4, comme déjà dit, elle est elle aussi de forme sensiblement rectangulaire.

Le joint 2 présente, par exemple, une partie périphérique 45 et ladite zone plane 8 est située en retrait de la partie périphérique. Un tel joint est obtenu, par exemple, par emboutissage. Ladite partie périphérique 45 pourra présenter des extensions 46 faisant bride d'accrochage sur le corps 30.

Comme plus particulièrement illustré à la figure 5, ledit joint 2 présente un bossage 19 le long d'une partie de l'ouverture 5 du joint, prévu en vis-à-vis de l'aile de déviation 4 du volet, quand celui-ci est en position de fermeture. Ledit bossage 19 est configuré pour être comprimé par l'aile de déviation 4 du volet quand celui-ci est en position de fermeture. Ceci améliore encore l'étanchéité.

Le volet 1 présente, par exemple, un logement 20 pour un arbre 21 d'articulation. Il s'agit, notamment, d'une articulation en rotation autour de l'axe d'articulation 16, comme cela est illustré par la flèche repérée 22. Ledit logement se trouve, par exemple, dans une extension 23 de la zone intermédiaire 6, s'étendant depuis la face opposée 13 à la face d'appui 10 de l'aile d'obturation et depuis la face d'appui 12 de l'aile de déviation 4 du volet.

Le logement 20 est ici traversant et l'arbre 21 débouche de part et d'autre du logement 20. Ledit arbre 21 est articulé en rotation dans des orifices 50 (visibles à la figure 2) ménagé dans le corps 30. L'arbre 21 est relié à l'extension 23 de façon connue en soi.

L'aile d'obturation 3, l'aile de déviation 4, la zone intermédiaire 6 et son extension 23 forment, par exemple, une pièce unique, notamment issue de fonderie.

Ledit joint 2 pourra présenter une zone borgne 36, située en vis-à-vis de ladite aile de déviation 4 lorsque le volet 1 est en position de fermeture. Autrement dit, comme déjà expliqué plus haut, l'ouverture 5 du joint n'est prévue qu'au niveau de l'aile d'obturation 3, le volet 1 étant en position de fermeture.

Ledit corps 30 pourra d'ailleurs être configuré pour définir une lame d'air 38 entre ladite zone borgne 36 du joint et ledit logement 37. On améliore de la sorte l'isolation thermique du moteur. Ladite extension 23 du volet accueillant son arbre d'articulation 21 est localisée de façon à fermer ladite lame de fluide 38.

Si l'on se reporte de nouveau aux figures 1 et 2, on constate que ledit corps 30 pourra être réalisé en deux parties 30a, 30b, chaque partie définissant un desdits conduits 31, 32, et présentant une ouverture venant en correspondance pour définir ladite fenêtre 33. Ledit joint d'étanchéité joue alors un rôle d'étanchéité entre lesdites deux parties 30a, 30b vis-à-vis de l'extérieur de la vanne.

Les orifices 50 pour l'arbre d'articulation 21 sont ici situés dans la partie 30b définissant le conduit auxiliaire 32.

Ladite vanne pourra par ailleurs comprendre un système de transmission, non-représenté, entre un arbre de sortie du moteur et l'arbre 21 d'articulation du volet 1.

## Revendications

1. Vanne de circulation de gaz d'échappement d'un moteur comprenant un corps (30) définissant un conduit principal (31), destiné à être raccordé à une ligne d'échappement du moteur, et un conduit auxiliaire (32) débouchant dans ledit conduit principal (31) pour une recirculation des gaz d'échappement, ladite vanne comprenant en outre un volet (1) mobile entre une position de fermeture, empêchant la communication entre les deux conduits (31, 32), et une position de pleine recirculation, permettant la mise en communication desdits conduits (31, 32), vanne dans laquelle ledit corps (30) et ledit volet (1) sont mutuellement configurés pour que, dans ladite position de pleine recirculation, ledit volet (1) obture ledit conduit principal (31) de 65 à 95%,
ledit conduit auxiliaire (32) débouchant dans ledit conduit principal (31) par une fenêtre de passage (33) et ledit volet (1) fermant ladite fenêtre de passage (33) en position de fermeture, ledit volet présentant une aile (4), dite de déviation, fermant partiellement ledit conduit principal (31) lorsque le volet (1) est en positon de pleine recirculation,
le volet étant monté pivotant par un axe d'articulation dans le corps et le volet comprenant une aile d'obturation (3) fermant la fenêtre de passage (33) lorsque le volet est en position de fermeture, ladite aile d'obturation (3) étant reliée à l'aile de déviation (4) par une zone intermédiaire (6), l'axe d'articulation étant à distance du volet (1),
l'aile de déviation (4) et le corps (30) de la vanne étant configurés pour que, lorsque le volet (1) est en position de pleine recirculation, une fente (40) soit ménagée entre ladite aile de déviation (4) et ledit corps (30),
ladite aile de déviation (4) présentant un bord libre (39) venant en vis-à-vis du corps (30) et ladite fente (40) étant située tout le long dudit bord libre (39),
la fente (40) présentant une épaisseur constante entre le bord libre (39) et le corps (30), en position de pleine recirculation.

2. Vanne selon la revendication 1 dans laquelle ladite aile de déviation (4) présente un contour rectangulaire et ledit conduit principal (31) présente une section sensiblement rectangulaire, au moins au droit de l'emplacement de l'aile de déviation (4) lorsque le volet (1) est position de pleine recirculation.

3. Vanne selon la revendication 1 ou 2 comprenant en outre un joint d'étanchéité (2), ledit joint présentant une ouverture (5) en correspondance avec ladite fenêtre de passage (33) pour la circulation du fluide, ledit volet (1) fermant ladite ouverture (5) en position de fermeture.

4. Vanne selon la revendication 3, ladite aile d'obturation (4) obturant ladite ouverture (5) du joint (2), lorsque le volet (1) est dans la position de fermeture, ladite aile d'obturation (3) et ladite aile de déviation (4) étant alors prévues de part et d'autre du joint (5) tandis que ladite zone intermédiaire (6) traverse ladite ouverture du joint (2).

5. Vanne selon la revendication 4, l'axe d'articulation du volet étant à proximité de la zone intermédiaire (6) du volet (1) et, selon la direction de l'axe d'articulation du volet, ladite aile d'obturation (3) présentant une dimension s'étendant de part et d'autre au-delà de la dimension selon laquelle s'étend ladite aile de déviation (4).

6. Vanne selon la revendication 5, dans laquelle ladite aile de déviation (4) et ladite zone intermédiaire (6) s'étendent sensiblement selon la même dimension, selon ladite direction de l'axe d'articulation du volet (1).

## Patentansprüche

1. Abgasumwälzventil eines Motors, das einen Körper (30) aufweist, der einen Hauptkanal (31), der dazu bestimmt ist, an eine Auspuffleitung des Motors angeschlossen zu werden, und einen Hilfskanal (32) definiert, der für eine Rückführung der Abgase in den Hauptkanal (31) mündet, wobei das Ventil außerdem eine Klappe (1) enthält, die zwischen einer Schließstellung, die die Verbindung zwischen den zwei Kanälen (31, 32) verhindert, und einer Stellung vollständiger Rückführung beweglich ist, die die Verbindung der Kanäle (31, 32) erlaubt, Ventil, bei dem der Körper (30) und die Klappe (1) gegenseitig konfiguriert sind, damit die Klappe (1) in der Stellung vollständiger Rückführung den Hauptkanal (31) um 65 bis 95% verschließt,
wobei der Hilfskanal (32) über ein Durchgangsfenster (33) in den Hauptkanal (31) mündet, und die Klappe (1) das Durchgangsfenster (33) in der Schließstellung schließt, wobei die Klappe einen so genannten Umleitungsflügel (4) aufweist, der den Hauptkanal (31) teilweise schließt, wenn die Klappe (1) in der Stellung vollständiger Rückführung ist,
wobei die Klappe um eine Gelenkachse schwenkbar in den Körper montiert ist, und die Klappe einen Verschlussflügel (3) enthält, der das Durchgangsfenster (33) schließt, wenn die Klappe in der Schließstellung ist, wobei der Verschlussflügel (3) über eine Zwischenzone (6) mit dem Umleitungsflügel (4) verbunden ist, wobei die Gelenkachse in Abstand zur Klappe (1) ist, wobei der Umleitungsflügel (4) und der Körper (30) des Ventils so konfiguriert sind, dass, wenn die Klappe (1) in der Stellung vollständiger Rückführung ist, ein Schlitz (40) zwischen dem Umleitungsflügel (4) und dem Körper (30) ausgespart ist,
wobei der Umleitungsflügel (4) einen freien Rand (39) aufweist, der dem Körper (30) gegenüberliegt, und der Schlitz (40) sich ganz entlang des freien Rands (39) befindet,
wobei der Schlitz (40) in der Stellung vollständiger Rückführung eine konstante Dicke zwischen dem freien Rand (39) und dem Körper (30) aufweist.

2. Ventil nach Anspruch 1, wobei der Umleitungsflügel (4) einen rechtwinkligen Umriss hat, und der Hauptkanal (31) zumindest vor der Einbaustelle des Umleitungsflügels (4 einen im Wesentlichen rechtwinkligen Querschnitt) hat, wenn die Klappe (1) in der Stellung vollständiger Rückführung ist.

3. Ventil nach Anspruch 1 oder 2, das außerdem eine Dichtung (2) enthält, wobei die Dichtung eine Öffnung (5) entsprechend dem Durchgangsfenster (33) für die Umwälzung des Fluids hat, wobei die Klappe (1) die Öffnung (5) in der Schließstellung verschließt.

4. Ventil nach Anspruch 3, wobei der Verschlussflügel (4) die Öffnung (5) der Dichtung (2) verschließt, wenn die Klappe (1) in der Schließstellung ist, wobei der Verschlussflügel (3) und der Umleitungsflügel (4) dann zu beiden Seiten der Dichtung (5) vorgesehen sind, während die Zwischenzone (6) die Öffnung der Dichtung (2) durchquert.

5. Ventil nach Anspruch 4, wobei die Gelenkachse der Klappe sich in der Nähe der Zwischenzone (6) der Klappe (1) befindet, und der Verschlussflügel (3) gemäß der Richtung der Gelenkachse der Klappe eine Abmessung aufweist, die sich zu beiden Seiten jenseits der Abmessung erstreckt, gemäß der sich der Umleitungsflügel (4) erstreckt.

6. Ventil nach Anspruch 5, wobei der Umleitungsflügel (4) und die Zwischenzone (6) sich im Wesentlichen gemäß der gleichen Abmessung in Richtung der Gelenkachse der Klappe (1) erstrecken.

## Claims

1. Circulation valve for the exhaust gases of an engine including a body (30) defining a main conduit (31), intended to be connected to an exhaust line of the engine, and an auxiliary conduit (32) opening into said main conduit (31) in order to recirculate the exhaust gases, said valve further including a shutter (1) movable between a closing position, preventing communication between the two conduits (31, 32), and a full recirculation position, enabling communication to be established between said conduits (31, 32), in which valve said body (30) and said shutter (1) are mutually configured such that, in said full recirculation position, said shutter (1) blocks 65 to 95% of said main conduit (31),
said auxiliary conduit (32) opening into said main conduit (31) via a passage window (33) and said shutter (1) closing said passage window (33) when in the closing position, said shutter including a diverter flap (4) partially closing said main conduit (31) when the shutter (1) is in the full recirculation position,
the shutter being mounted in the body to pivot about an articulation shaft and the shutter including a blocking flap (3) closing the passage window (33) when the shutter is in the closing position, said blocking flap (3) being connected to the diverter flap (4) by an intermediate area (6), the articulation shaft being at a distance from the shutter (1),
the diverter flap (4) and the body (30) of the valve being configured so that when the shutter (1) being in the full recirculation position a slot (40) is formed between said diverter flap (4) and said body (30),
said diverter flap (4) having a free edge (39) facing the body (30) and said slot (40) being located all along said free edge (39),
the slot (40) having a constant thickness between the free edge (39) and the body (30) in the full recirculation position.

2. Valve according Claim 1, wherein said diverter flap (4) has a rectangular contour and said main conduit (31) has a substantially rectangular section at least in line with the location of the diverter flap (4) when the shutter (1) is in the full recirculation position.

3. Valve according to Claim 1 or 2, further including a seal (2) including an opening (5) in corresponding relationship with said passage window (33) for the circulation of the fluid, said shutter (1) closing said opening (5) when in the closing position.

4. Valve according to Claim 3, said blocking flap (4) blocking said opening (5) of the seal (2) when the shutter (1) is in the closing position, said blocking flap (3) and said diverter flap (4) then being on opposite sides of the seal (5) while said intermediate area (6) passes through said opening of the seal (2).

5. Valve according to Claim 4, the articulation shaft of the shutter being in the vicinity of the intermediate area (6) of the shutter (1) and said blocking flap (3) having a dimension in the direction of the articulation shaft of the shutter extending on each side beyond the dimension over which said diverter flap (4) extends.

6. Valve according to Claim 5, wherein said diverter flap (4) and said intermediate area (6) extend over substantially the same distance in said direction of the articulation shaft of the shutter (1).
